# EUROPEAN PATENT SPECIFICATION

(11) **EP 1 783 042 B1**
(45) Date of publication and mention of the grant of the patent: **09.07.2008**
(21) Application number: 05356194.0
(22) Date of filing: 04.11.2005
(51) Int. Cl.: B62L 3/02

(54) **Mechanical hand brake device for a motor vehicle**
Handbremse für ein Motorfahrzeug
Frein à main pour véhicule à moteur

(43) Date of publication of application: 09.05.2007
(73) Proprietor: Kwang Yang Motor Co., Ltd., San-Min Dist., Kaohsiung City (TW)
(72) Inventor: Shieh, Jia-Jang, Kaohsiung (TW); Shao, Chien-Neng, Kaohsiung Hsien (TW)
(74) Representative: Maureau, Philippe

(56) References cited:
- EP-A- 1 081 039
- WO-A-00/50295
- US-A- 3 957 131
- US-A- 5 363 943

## Description

This invention relates to a mechanical hand brake assembly, and more particularly to a mechanical hand brake assembly for a motor vehicle.

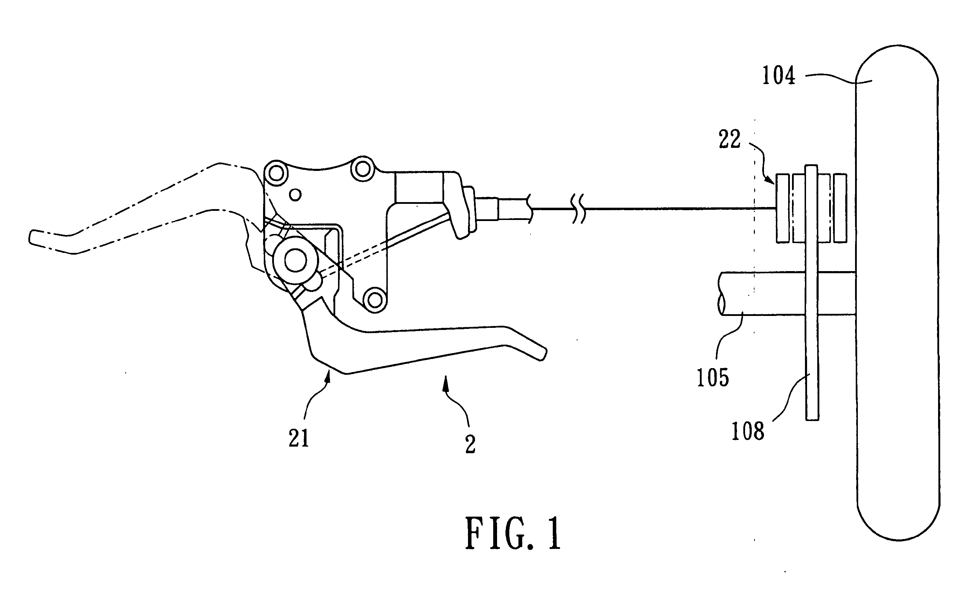

Referring to Fig. 1, a first conventional hand brake assembly for a motor vehicle, such as a beach car or a scooter, includes a rotary lever 21 and a braking unit 22 controlled by the rotary lever 21. A brake assembly as defined in the preamble of claim 1 is known from EP 1081039. The rotary lever 21 is pivotable between a release position shown by the solid lines and a locking position shown by the phantom lines. When the rotary lever 21 is disposed in the locking position, a brake disk 108 is clamped by the braking unit 22 so as to prevent rotation of an axle 105 and, thus, a wheel 104. When the rotary lever 21 is disposed in the release position, the brake disk 108 is released from the braking unit 22 so as to allow for rotation of the wheel 104.

Even when the brake disk 108 is clamped by the braking unit 22, however, it is still possible to operate a twist grip throttle (not shown) in an attempt to increase the rotation speed of an engine of the motor vehicle. When the output power of the engine is large enough to overcome the clamping force of the braking unit 22 with respect to the brake disk 108, the wheel 104 rotates. This results in substantial wear between the brake disk 108 and the braking unit 22.

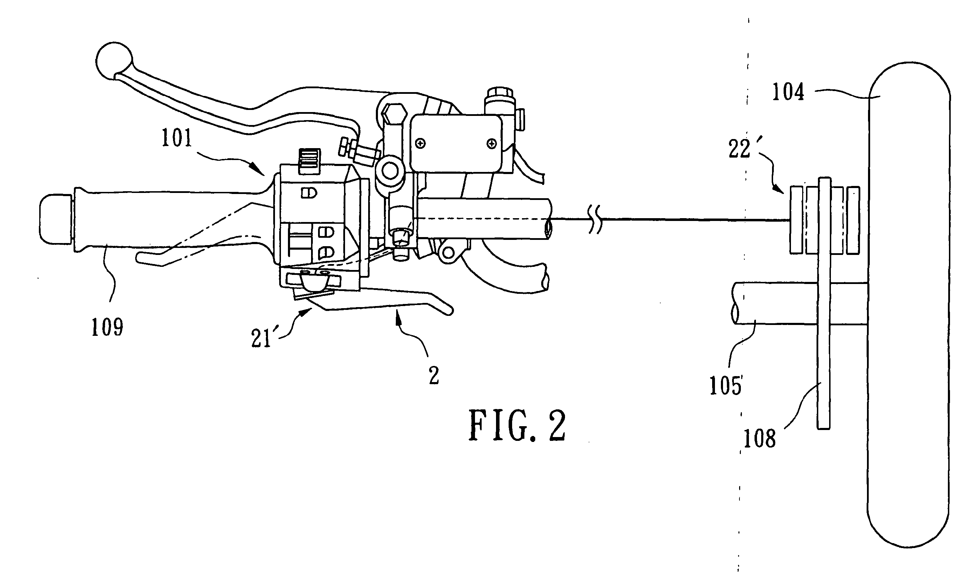

Referring to Fig. 2, to solve this problem, a second hand brake device is provided to include a rotary lever 21' disposed pivotally on a handle unit 101, and a braking unit 22' connected to the rotary lever 21'. The rotary lever 21' is pivotable between a release position shown by the solid lines and a locking position shown by the phantom lines. When the rotary lever 21' is disposed in the locking position, a brake disk 108 is clamped by the braking unit 22' so as to prevent rotation of an axle 105 and, thus, a wheel 104. When the rotary lever 21' is disposed in the release position, the brake disk 108 is released from the braking unit 22' so as to allow for rotation of the wheel 104.

The rotary lever 21' is positioned so as to be aligned with and adjacent to a left handgrip 109 of the handle unit 101 when the rotary lever 21' is disposed in the locking position. Such an arrangement can remind the rider to move the rotary lever 21' from the locking position to the release position prior to starting of an engine (not shown) of the motor vehicle.

After the motor vehicle is started, however, some riders sometimes operate the motor vehicle with a single hand. As such, when the rotary lever 21' is disposed in the locking position, the twist grip throttle may be operated to rotate the wheel 104.

Referring to Fig. 3, a mechanical hand brake device disclosed in Japanese Patent Application Laid-open Publication No. JP2005001511 includes a similar rotary lever 21", which is pivotable to a locking position between a clutch lever 102 and a handgrip 109 so as to prevent the clutch lever 102 from being pivoted toward the handgrip 109. This also attracts the rider's attention to the locking position of the rotary lever 21".

However, such a structure requiring mechanical cooperation with the clutch lever 102 necessitates a high level of manufacturing precision, ultimately increasing overall manufacturing costs.

Therefore, the object of this invention is to provide a mechanical hand brake device for a motor vehicle, which can prevent a start button from being pressed when a rotary lever is disposed in a locking position.

According to this invention, there is provided a brake assembly for a motor vehicle. The brake assembly includes a handle unit, on which a start button is disposed, and a mechanical hand brake device. The mechanical hand brake device includes a rotary lever disposed pivotally on the handle unit, and a braking unit connected to the rotary lever. The rotary lever is pivotable on the handle unit between a locking position for locking a wheel axle by the braking unit to prevent rotation of the wheel axle, and a release position for releasing the wheel, axle from the braking unit so as to allow rotation of the wheel axle. The rotary lever is positioned so as to allow the start button to be pressed when the rotary lever is disposed in the release position, and so as to be aligned with and adjacent to the start button, thereby preventing the start button from being pressed when the rotary lever is disposed in the locking position.

These and other features and advantages of this invention will become apparent in the following detailed description of a preferred embodiment of this invention, with reference to the accompanying drawings, in which:
Fig. 1 is a schematic view of a first conventional hand brake device for a motor vehicle;
Fig. 2 is a schematic view of a second conventional hand brake device for a motor vehicle;

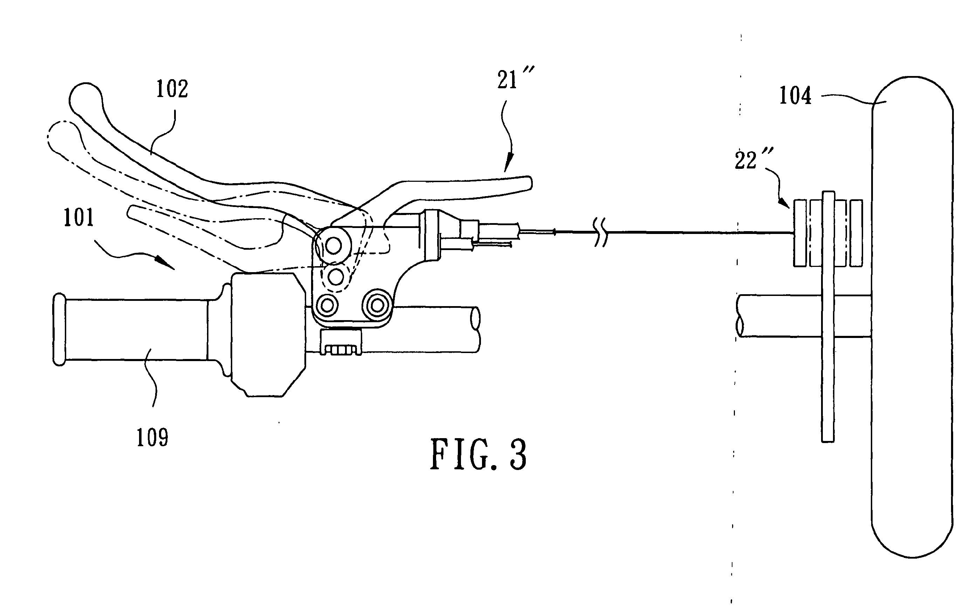

Fig. 3 is a schematic view of a mechanical hand brake device disclosed in Japanese Patent Application Laid-open Publication No. JP2005001511;
Fig. 4 is a schematic view of the preferred embodiment of a mechanical hand brake device for a motor vehicle according to this invention when a rotary lever is disposed in a locking position; and
Fig. 5 is a schematic view of the preferred embodiment when the rotary lever is disposed in a release position.

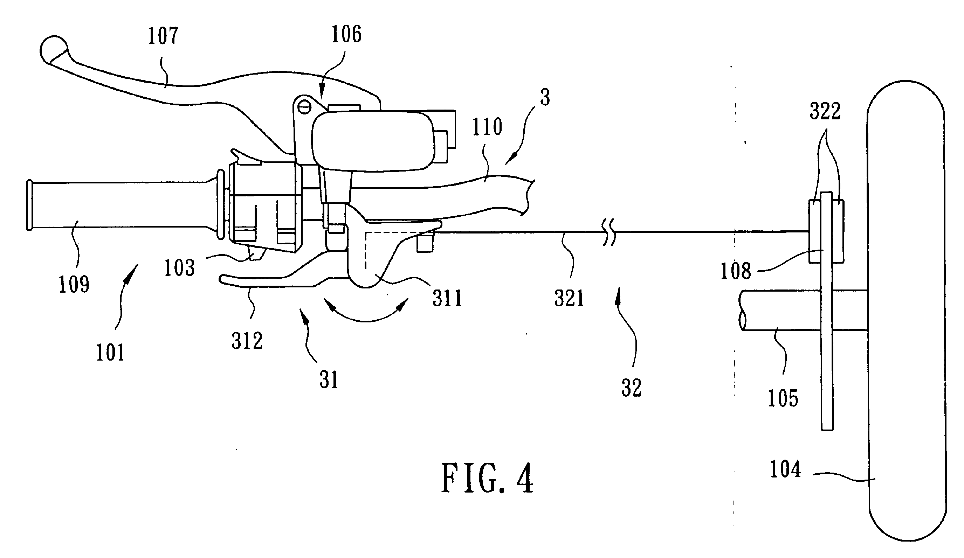

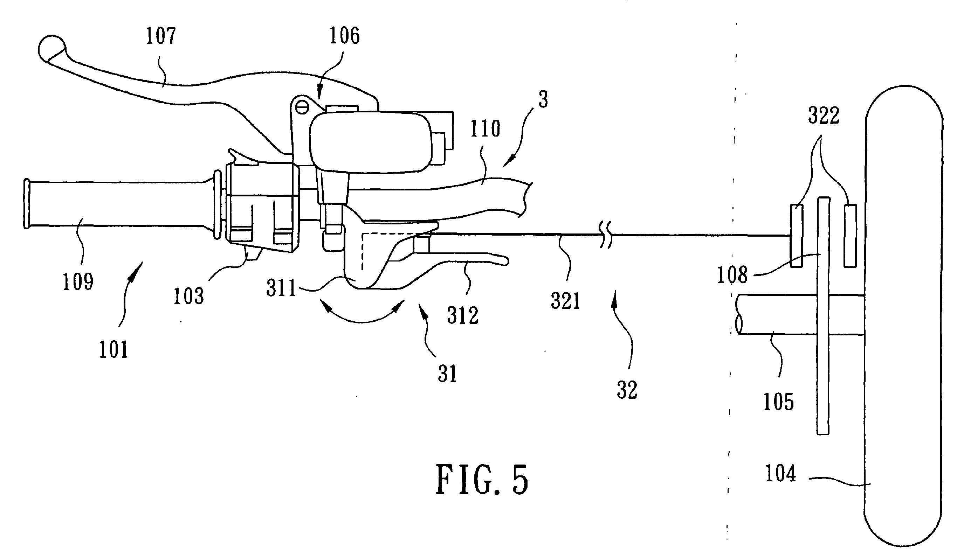

Referring to Figs. 4 and 5, the preferred embodiment of a mechanical hand brake device 3 for a motor vehicle according to this invention includes an actuation unit 31 and a braking unit 32. The motor vehicle includes a handle unit 101, a start button 103, an axle 105, a wheel 104 disposed fixedly on the axle 105, and a brake disk 108 sleeved fixedly on the axle 105. The handle unit 101 includes a rod body 110, and a left handgrip member 109 sleeved fixedly on a left end of the rod body 110. The start button 103 is disposed on the rod body 110. The motor vehicle further includes a first mounting seat 106 disposed fixedly on the rod body 110, and a brake lever 107 disposed pivotally on the first mounting seat 106.

The actuation unit 31 includes a second mounting seat 311 disposed fixedly on the first mounting seat 106, and a rotary lever 312 disposed pivotally on the second mounting seat 311 and pivotable between a locking position shown in Fig. 4 and a release position shown in Fig. 5. The braking unit 32 includes a cable 321 and a pair of brake shoes 322. The brake disk 108 is disposed between the brake shoes 322. The cable 321 has an upper end connected to the rotary lever 312, and a lower end connected to the brake shoes 322.

Referring to Fig. 4, when the rotary lever 312 is disposed in the locking position, the brake disk 108 is clamped between the brake shoes 322 so as to prevent rotation of the axle 105 and, thus, the wheel 104, and the rotary lever 312 is aligned with and adjacent to the start button 103 so as to prevent the start button 103 from being pressed. Because the motor vehicle cannot be started and therefore operated when the rotary lever 312 is disposed in the locking position, wear between the brake disk 108 and the brake shoes 322 as a result of operation of the motor vehicle when the brake disk 108 is clamped between the brake shoes 322 can be prevented.

Referring to Fig. 5, when the rotary lever 312 is rotated 180 degrees to the release position, the brake shoes 322 are removed from the brake disk 108 so as to allow for rotation of the axle 105. In this state, the rotary lever 312 is distanced from the start button 103. Hence, the start button 103 can be pressed.

## Claims

1. A brake assembly for a motor vehicle, the brake assembly including a handle unit (101), on which a start button (103) is disposed, and a mechanical hand brake device (3), the mechanical hand brake device including a rotary lever (312) disposed pivotally on the handle unit (101), and a braking unit (32) connected to the rotary lever (312), the rotary lever (312) being pivotable on the handle unit (101) between a locking position for locking a wheel axle (105) by the braking unit (32) to prevent rotation of the wheel axle (105), and a release position for releasing the wheel axle (105) from the braking unit (32) so as to allow rotation of the wheel axle (105), **characterized in that** the rotary lever (312) is positioned so as to allow the start button (103) to be pressed when the rotary lever (312) is disposed in the release position, and so as to be aligned with and adjacent to the start button (103), thereby preventing the start button (103) from being pressed when the rotary lever is disposed in the locking position.

2. The brake assembly as claimed in claim 1, further **characterized in that** the braking unit (32) includes a pair of brake shoes (322), a brake disk (108) sleeved fixedly on the wheel axle (105) and disposed between the brake shoes (322), and a cable (321) having an upper end connected to the rotary lever (312), and a lower end connected to the brake shoes (322), the brake disk (108) being clamped between the brake shoes (322) so as to prevent rotation of the wheel axle (105) when the rotary lever (312) is disposed in the locking position, the brake disk (108) being released from the brake shoes (322) so as to allow rotation of the wheel axle (105) when the rotary lever (312) is disposed in the release position.

## Patentansprüche

1. Bremsanordnung für ein Motorfahrzeug, die Bremsanordnung umfasst eine Bedieneinheit (101), auf der ein Anlassknopf (103) angeordnet ist, und eine Handbremse (3), wobei die Handbremse einen Drehhebel (312) enthält, der auf der Bedieneinheit (101) drehbar angeordnet ist, und eine Bremseinheit (32), die mit dem Drehhebel (312) verbunden ist, wobei der Drehhebel (312) auf der Bedieneinheit (101) drehbar ist zwischen einer Feststellposition zum Feststellen einer Radachse (105) durch die Bremseinheit (32), um die Drehung der Radachse (105) zu verhindern, und einer Freigabeposition zum Freigeben der Radachse (105) von der Bremseinheit (32), um die Drehung der Radachse (105) zu gestatten, **dadurch gekennzeichnet, dass** der Drehhebel (312) derart angeordnet ist, dass er das Drücken des Anlassknopfes (103) gestattet, wenn der Drehhebel (312) in der Freigabeposition angeordnet ist, und dass er mit dem Anlassknopf (103) fluchtend und zu ihm benachbart angeordnet ist, wodurch er das Drücken des Anlassknopfes (103) verhindert, wenn der Drehhebel in der Feststellposition angeordnet ist.

2. Bremsanordnung wie in Anspruch 1 beansprucht, ferner **dadurch gekennzeichnet, dass** die Bremseinheit (32) ein Paar Bremsbacken (322), eine Bremsscheibe (108), die fest auf der Radachse (105) angebracht ist und zwischen den Bremsbacken (322) angeordnet ist, und ein Kabel (321) enthält mit einem oberen Ende, das mit dem Drehhebel (312) verbunden ist, und einem unteren Ende, das mit den Bremsbacken (322) verbunden ist, wobei die Bremsscheibe (108) zwischen den Bremsbacken (322) geklemmt wird, so dass die Drehung der Radachse (105) verhindert wird, wenn der Drehhebel (312) in der Feststellposition angeordnet ist, wobei die Bremsscheibe (108) von den Bremsbacken (322) freigegeben wird, so dass sie die Drehung der Radachse (105) ermöglicht, wenn der Drehhebel (312) in der Freigabeposition angeordnet ist.

## Revendications

1. Ensemble de frein pour un véhicule à moteur, l'ensemble de frein comprenant une unité de poignée (101), sur laquelle un bouton de démarrage (103) est disposé, et un dispositif de frein à main mécanique (3), le dispositif de frein à main mécanique comprenant un levier rotatif (312) disposé de manière pivotante sur l'unité de poignée (101), et une unité de freinage (32) raccordée au levier rotatif (312), le levier rotatif (312) pouvant pivoter sur l'unité de poignée (101) entre une position de blocage pour bloquer un essieu de roue (105) par l'unité de freinage (32) afin d'empêcher la rotation de l'essieu (105), et une position de déblocage pour débloquer l'essieu de roue (105) de l'unité de freinage (32) afin de permettre la rotation de l'essieu de roue (105), **caractérisé en ce que** le levier rotatif (312) est positionné afin de permettre au bouton de démarrage (103) d'être enfoncé lorsque le levier rotatif (312) est disposé dans la position de déblocage, et afin d'être aligné avec et adjacent au bouton de démarrage (103), empêchant ainsi au bouton de démarrage (103) d'être enfoncé lorsque le levier rotatif est disposé dans la position de blocage.

2. Ensemble de frein selon la revendication 1, **caractérisé en outre en ce que** l'unité de freinage (32) comprend une paire de segments de frein (322), un disque de frein (108) monté par manchon de manière fixe sur l'essieu de roue (105) et disposé entre les segments de frein (322), et un câble (321) ayant une extrémité supérieure raccordée au levier rotatif (312), et une extrémité inférieure raccordée aux segments de frein (322), le disque de frein (108) étant serré entre les segments de frein (322) afin d'empêcher la rotation de l'essieu de roue (105) lorsque le levier rotatif (312) est disposé dans la position de blocage, le disque de frein (108) étant libéré des segments de frein (322) afin de permettre la rotation de l'essieu de roue (105) lorsque le levier rotatif (312) est disposé dans la position de déblocage.
